# EUROPÄISCHE PATENTANMELDUNG

(11) **EP 3 851 331 A1**
(43) Veröffentlichungstag der Anmeldung: **21.07.2021**
(21) Anmeldenummer: 21151872.5
(22) Anmeldetag: 15.01.2021
(51) Int. Cl.: B60R 16/02

(54) **SELBSTENTFALTENDES KABELBAUMSYSTEM MIT EINEM KABELBAUM UND MIT EINEM AKTUATOR SOWIE VERFAHREN ZUM BETRIEB EINES SOLCHEN KABELBAUMSYSTEMS**

(30) Priorität: 15.01.2020 DE 102020100859
(71) Anmelder: Yazaki Systems Technologies GmbH, 93059 Regensburg (DE)
(72) Erfinder: EINERT, Martin, 93077 Bad Abbach (DE); NAVARRO MÁLAGA, Aldo, 73730 Esslingen am Neckar (DE)
(74) Vertreter: Patentanwaltskanzlei WILHELM & BECK

(57) **Zusammenfassung**

Die Erfindung betrifft ein Kabelbaumsystem und ein Verfahren zum Betrieb eines Kabelbaumsystems, wobei das Kabelbaumsystem wenigstens einen Aktuator und wenigstens einen Kabelbaum mit wenigstens einem elektrischen Kabel aufweist, wobei der Aktuator mit dem Kabelbaum verbunden ist, wobei der Aktuator ausgebildet ist, den Kabelbaum zwischen einer Transportposition und einer zur Transportposition unterschiedlichen Montageposition zu bewegen.

## Beschreibung

Diese Patentanmeldung beansprucht die Priorität der deutschen Patentanmeldung DE 10 2020 100 859.7 deren Offenbarungsgehalt hiermit durch Rückbezug aufgenommen wird.

Die Erfindung betrifft ein Kabelbaumsystem gemäß Patentanspruch 1 und ein Verfahren zum Betrieb eines solchen Kabelbaumsystems gemäß Patentanspruch 11.

Es ist ein Kabelbaum mit mehreren Kabeln bekannt, wobei an dem jeweiligen Ende des Kabelbaums eine Kontakteinrichtung angeordnet ist. Der Kabelbaum wird auf einem Formbrett hergestellt und nach Herstellung vom Formbrett abgenommen, manuell zusammengelegt und verpackt. Zur Montage im Kraftfahrzeug wird nach Entpacken des Kabelbaums der Kabelbaum wieder manuell im Fahrzeug verlegt. Die manuellen Arbeitsschritte sind zeitlich aufwendig und kostenintensiv.

Es ist Aufgabe der Erfindung ein verbessertes Kabelbaumsystem und ein verbessertes Verfahren zum Betrieb solch eines Kabelbaumsystems bereitzustellen.

Diese Aufgabe wird mittels eines Kabelbaumsystems gemäß Patentanspruch 1 und eines Verfahrens zum Betrieb solch eines Kabelbaumsystems gemäß Patentanspruch 11 gelöst. Vorteilhafte Ausführungsformen sind in den abhängigen Ansprüchen angegeben.

Es wurde erkannt, dass ein verbessertes Kabelbaumsystem für ein Kraftfahrzeug dadurch bereitgestellt werden kann, dass der Kabelbaum einen Aktuator und einen Kabelbaum mit wenigstens einem elektrischen Kabel aufweist. Der Aktuator ist mit dem Kabelbaum verbunden. Der Aktuator ist ausgebildet, den Kabelbaum zwischen einer Transportposition und einer zur Transportposition unterschiedlichen Montageposition zu bewegen.

Diese Ausgestaltung hat den Vorteil, dass der Kabelbaum durch den Aktuator automatisiert sich ein- und ausfalten kann, ohne dass hierfür der Kabelbaum manuell zu bewegen ist.

In einer weiteren Ausführungsform ist der Aktuator ausgebildet, in der Transportposition und/oder in der Montageposition den Kabelbaum zu halten. Dadurch kann auf zusätzliche Verpackungsmittel oder auf ein Formbrett verzichtet werden.

In einer weiteren Ausführungsform ist in der Transportposition der Kabelbaum eingefaltet und/oder eingerollt. In der Montageposition ist der Kabelbaum entlang einer vordefinierten Bahn ausgelegt. Dabei weist der Kabelbaum eine größere Erstreckung auf als in der Transportposition.

In einer weiteren Ausführungsform weist das Kabelbaumsystem eine Ummantelung auf, wobei die Ummantelung zumindest abschnittsweise den Kabelbaum umgreift und den Kabelbaum mit dem Aktuator verbindet. Der Aktuator ist vorzugsweise zumindest abschnittsweise in die Ummantelung eingebettet. Diese Ausgestaltung hat den Vorteil, dass das Kabelbaumsystem besonders kompakt ausgebildet ist. Zweckmäßig ist hierbei, wenn die Ummantelung einen Schaumwerkstoff aufweist.

In einer weiteren Ausführungsform weist der Aktuator eine Soft-Robotic-Struktur auf. Dadurch kann das Kabelbaumsystem besonders leicht ausgebildet sein. Ferner ist das Kabelbaumsystem durch die Soft-Robotic-Struktur sehr flexibel und kann auch bei manuellem Verlegen, beispielsweise bei einer Reparatur des Kraftfahrzeugs, ohne weitere Beschädigung wieder von einer Komponente, beispielsweise einem Karosserieelement des Kraftfahrzeugs entfernt und danach wieder an dieser Komponente montiert werden.

In einer weiteren Ausführungsform weist der Aktuator einen elastischen langgestreckten Körper auf, wobei der Körper innenseitig einen gegenüber der Umgebung des Kabelbaums fluiddichten Druckraum begrenzt, wobei der Druckraum mit einem Druckfluid füllbar ist, wobei das Druckfluid druckbeaufschlagbar oder druckentlastbar ist, wobei das Druckfluid auf den flexiblen Körper einen druckbeaufschlagenden oder druckentlastenden Druck ausübt, der bewirkt, dass sich mindestens ein Teil des elastisch länglichen Körpers krümmt und/oder streckt. Diese Ausgestaltung hat den Vorteil, dass das Kabelbaumsystem, insbesondere der Aktuator und die Ummantelung aus einem besonders kostengünstigen und elastischen Material gefertigt werden können. Ferner kann beispielsweise als Druckfluid Druckluft verwendet werden, die an üblichen Montageplätzen in der Fertigung eines Kraftfahrzeugs und/oder des Kabelbaums zur Verfügung steht.

In einer weiteren Ausführungsform ist der Druckraum an einer Seite des Kabelbaums angeordnet und verläuft im Wesentlichen parallel zum Kabelbaum. Dabei erstreckt sich der Druckraum vorzugsweise zu wenigstens 90 %, insbesondere im Wesentlichen über eine gesamte Längserstreckung des Kabelbaums.

In einer weiteren Ausführungsform weist der langgestreckte Körper einen ersten Wandabschnitt mit einem Profil und einem gegenüberliegend zum Wandabschnitt angeordneten zweiten Wandabschnitt auf. Der erste Wandabschnitt ist auf einer dem Kabelbaum zugewandten Seite und der zweite Wandabschnitt ist auf einer dem Kabelbaum abgewandten Seite angeordnet. Der zweite Wandabschnitt weist ein sich wiederholendes, variables weiteres Profil auf, wobei das weitere Profil derart ausgebildet ist, dass eine innere Höhe des zweiten Wandabschnitts über eine Länge variiert. Zusätzlich oder alternativ kann der zweite Wandabschnitt eine höhere Elastizität aufweisen als der erste Wandabschnitt. Der zweite Wandabschnitt ist ausgebildet, den Aktuator zusammen mit dem Kabelbaum als Reaktion auf eine Änderung des Druckfluids zu krümmen.

In einer weiteren Ausführungsform weist das Kabelbaumsystem ein Anschlussventil auf. Das Anschlussventil ist fluidisch mit dem Druckraum verbunden. Das Anschlussventil ist derart angeordnet, dass das Anschlussventil sowohl in der Transportposition als auch in der Montageposition von außen zugänglich ist.

In einer weiteren Ausführungsform weist der Aktuator ein dielektrisches Elastomer, eine elektrische Verbindung und eine Kontakteinrichtung auf, wobei das dielektrische Elastomer mit dem Kabelbaum mechanisch verbunden ist. Die elektrische Verbindung verbindet das dielektrische Elastomer mit der Kontakteinrichtung elektrisch. Die Kontakteinrichtung ist (zur Bereitstellung einer elektrischen Energie) mit einer elektrischen Energiequelle elektrisch verbindbar.

In einer weiteren Ausführungsform ist das dielektrische Elastomer bandartig und dünnwandig ausgebildet und im Wesentlichen parallel verlaufend zum Kabelbaum angeordnet. Dadurch ist das Kabelbaumsystem besonders dünnwandig ausbildbar.

Im Betrieb des oben beschriebenen Kabelbaumsystems wird zum Transport des Kabelbaumsystems bewegt der Aktuator den Kabelbaum aus der Montageposition in die Transportposition. Das Kabelbaumsystem wird an einer Komponente eines Kraftfahrzeugs, insbesondere an einem Karosserieelement des Kraftfahrzeugs, positioniert und in eine vordefinierte Ausrichtung relativ zur Komponente gebracht. Der Aktuator bewegt den Kabelbaum von der Transportposition in die Montageposition und legt den Kabelbaum entlang einer vordefinierten Bahn an der Komponente aus. Das Kabelbaumsystem wird in der Montageposition an der Komponente mittels wenigstens eines Befestigungsmittels befestigt.

Diese Ausgestaltung hat den Vorteil, dass nicht manuell das Kabelbaumsystem an der Komponente ausgelegt und positioniert werden muss, sondern dies selbsttätig durch den im Kabelbaumsystem eingebauten Aktuator erfolgt.

Besonders zweckmäßig ist, wenn zur Überführung des Kabelbaums von der Transportposition in die Montageposition oder von der Montageposition in die Transportposition ein druckbeaufschlagendes Druckfluid in den Druckraum eingeleitet wird, wobei das Druckfluid auf den flexiblen Körper einen druckbeaufschlagenden Druck ausübt, wobei der Druck bewirkt, dass sich mittels eines Teils des elastisch länglichen Körpers der Aktuator sich krümmt oder sich streckt. Der Aktuator nimmt den Kabelbaum mit.

Zweckmäßig kann auch sein, dass zur Überführung des Kabelbaums von der Transportposition in die Montageposition oder von der Montageposition in die Transportposition das Druckfluid aus dem Druckraum ausgeleitet wird, wobei ein Umgebungsdruck auf den flexiblen Körper einen druckbeaufschlagenden Druck ausübt, wobei der Druck bewirkt, dass mindestens ein Teil des elastisch länglichen Körpers des Aktuators sich krümmt oder sich streckt. Der Aktuator nimmt den Kabelbaum mit.

In einer weiteren Ausführungsform wird eine elektrische Energiequelle bereitgestellt, wobei die elektrische Energiequelle mit der Kontakteinrichtung elektrisch verbunden ist, wobei die elektrische Energiequelle eine elektrische Energie dem Aktuator bereitstellt, wobei mittels der elektrischen Energie der Aktuator von der Montageposition in die Transportposition oder von der Transportposition in die Montageposition bewegt wird, wobei die elektrische Energie in der Montageposition oder in der Transportposition vorzugsweise fortwährend bereitgestellt wird, wobei der Aktuator den Kabelbaum mitnimmt und den Kabelbaum von der Transportposition in die Montageposition oder von der Montageposition in die Transportposition überführt.

Nachfolgend wird die Erfindung anhand von Figuren näher erläutert. Dabei zeigen:
- Figur 1: eine perspektivische Darstellung eines Ausschnitts eines Kraftfahrzeugs;
- Figur 2: eine Schnittansicht durch ein Kabelbaumsystem des Kraftfahrzeugs entlang einer in Figur 1 gezeigten Schnittebene A-A durch das in Figur 1 gezeigte Kabelbaumsystem;
- Figur 3: einen Ausschnitt einer Schnittansicht entlang einer in Figur 2 gezeigten Schnittebene B-B durch das in Figur 2 gezeigte Kabelbaumsystem;
- Figur 4: einen Ausschnitt einer Schnittansicht entlang der in Figur gezeigten Schnittebene A-A durch das Kabelbaumsystem;
- Figur 5: einen Ausschnitt, der in Figur 1 mit der Markierung D markiert ist, entlang der in Figur 2 gezeigten Schnittebene B-B durch das Kabelbaumsystem;
- Figur 6: einen mit einer Markierung E in Figur 1 gezeigten weiteren Ausschnitt des in Figur 1 gezeigten Kabelbaumsystems entlang der in Figur 2 gezeigten Schnittebene B-B;
- Figur 7: eine Seitenansicht auf das in den Figuren 1 bis 6 gezeigte Kabelbaumsystem in einer Transportposition;
- Figur 8: ein Ablaufdiagramm eines Verfahrens zum Betrieb des in den Figuren 1 bis 7 gezeigten Kabelbaumsystems;
- Figur 9: eine schematische Darstellung des Kraftfahrzeugs mit einem Kabelbaumsystem gemäß einer zweiten Ausführungsform;
- Figur 10: eine Schnittansicht entlang einer in Figur 9 gezeigten Schnittebene C-C durch das in Figur 9 gezeigte Kabelbaumsystem;
- Figur 11: einen Ausschnitt einer Schnittansicht entlang einer in Figur 10 gezeigten Schnittebene D-D durch das in Figur 11 gezeigte Kabelbaumsystem; und
- Figur 12: ein Ablaufdiagramm eines Verfahrens zum Betrieb des in den Figuren 9 bis 11 gezeigten Kabelbaumsystems.

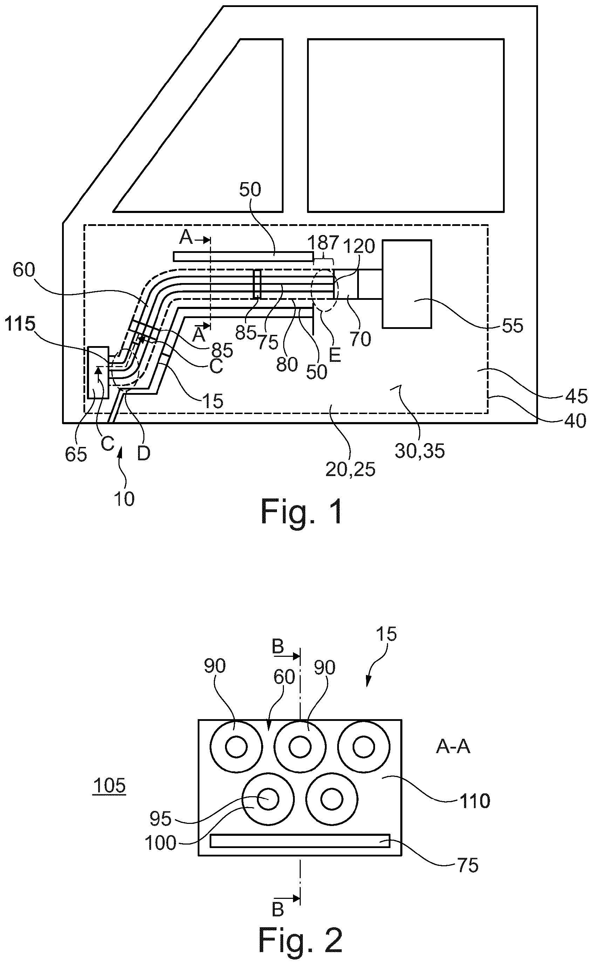

Figur 1 zeigt eine perpektivische Darstellung eines Ausschnitts eines Kraftfahrzeugs 10.

Das Kraftfahrzeug 10 weist ein Kabelbaumsystem 15 und wenigstens eine Komponente 20 auf, vorzugsweise ein Karosserieelement 25. Das Karosserieelement 25 ist in der Ausführungsform beispielhaft als Fahrzeugtüre ausgebildet. Auch kann die Komponente 20 des Kraftfahrzeugs 10 andersartig als in Figur 1 gezeigt ausgebildet sein. So kann beispielsweise die Komponente 20 auch ein Fahrzeugsitz des Kraftfahrzeugs 10 sein.

Die Komponente 20 weist eine Befestigungsfläche 30 auf. Die Befestigungsfläche 30 ist in dem Ausführungsbeispiel eine Innenseite 35 des Karosserieelements 25. Die Innenseite 35 begrenzt zusammen mit einer Türinnenverkleidung (in Figur 1 strichliert angedeutet) einen Innenraum 45, wobei in dem Innenraum 45 beispielhaft das Kabelbaumsystem 15 angeordnet ist. Die Innenseite 35 ist beispielhaft annähernd konkav ausgebildet. Eine plane oder eine andere gekrümmte Ausgestaltung der Innenseite 35 wäre auch denkbar.

Die Komponente 20 kann beispielhaft mehrere Strukturelemente 50, insbesondere Versteifungselemente, aufweisen, wobei das Versteifungselement 50 beispielsweise aus einem Blech ausgeformt sein kann. Das Versteifungselement 50 dient dazu, die Komponente 20 zu versteifen, sodass die Komponente 20 vordefinierte Bedingungen an eine Steifigkeit, beispielsweise für einen Seitenaufprallschutz und/oder an eine Verwindungssteifigkeit, einhält.

Das Kraftfahrzeug 10 kann beispielsweise eine weitere Komponente 55 aufweisen, wobei die weitere Komponente 55 beispielsweise ein Steuergerät oder ein Antriebsmotor, beispielsweise zum Antrieb eines Fensterelements des Kraftfahrzeugs 10, ist. In der Ausführungsform ist beispielhaft im Innenraum 45 zwischen der Innenverkleidung 40 und der Befestigungsfläche 30 die weitere Komponente 55 angeordnet.

Das Kabelbaumsystem 15 weist einen Kabelbaum 60, beispielhaft eine erste Kontakteinrichtung 65, eine zweite Kontakteinrichtung 70 und einen Aktuator 75 auf. Der Aktuator 75 ist in Figur 1 nur schematisch angedeutet.

Der Aktuator 75 ist mittels der Ummantelung 110 mit dem Kabelbaum 60 mechanisch verbunden. Der Aktuator 75 erstreckt sich über wenigstens 80 %, vorzugsweise 90 %, insbesondere 95 %, einer Längserstreckung des Kabelbaums 60. Dabei ist ein erstes Längsende 115 des Aktuators 75 im Wesentlichen angrenzend zur ersten Kontakteinrichtung 65 und ein zweites Längsende 120 im Wesentlichen angrenzend an die zweite Kontakteinrichtung 70 angeordnet (vgl. Figur 1).

Der Kabelbaum 60 verbindet elektrisch die erste Kontakteinrichtung 65 mit der zweiten Kontakteinrichtung 70. In Figur 1 ist beispielhaft die zweite Kontakteinrichtung 70 mit der weiteren Komponente 55 des Kraftfahrzeugs 10 elektrisch verbunden. Auf die erste und/oder zweite Kontakteinrichtung 65, 70 kann auch verzichtet werden.

Die erste Kontakteinrichtung 65 kann mit einer weiteren nicht dargestellten Kontakteinrichtung eines weiteren Kabelbaumsystems (in Figur 1 nicht dargestellt) verbunden sein. Selbstverständlich kann die erste Kontakteinrichtung 65 beispielsweise auch mit einem Steuergerät oder mit einer Schalteinrichtung, beispielsweise einem Bedienelement, elektrisch verbunden sein.

In Figur 1 befindet sich das Kabelbaumsystem 15 in einer Montageposition. In der Montageposition ist das Kabelbaumsystem 15 ausgestreckt und weist eine im Wesentlichen maximale Erstreckung in Längsrichtung auf. In der Montageposition ist das Kabelbaumsystem 15 im Wesentlichen einer vordefinierten Bahn 81 folgend in einem Montagebereich 80 angeordnet.

Der Montagebereich 80 schließt sich innenseitig an die Befestigungsfläche 30 an und wird geometrisch beispielhaft durch die Strukturelemente 50 der Komponente 20 seitlich begrenzt. Der Montagebereich 80 ist dabei der Bereich, in dem der Kabelbaum 60 zusammen mit dem Aktuator 75 verläuft und in dem der Kabelbaum 60 zu führen ist, um den Kabelbaum 60 zusammen mit dem Aktuator 75 mittels wenigstens eines Befestigungsmittels 85, beispielsweise mittels eines Halteclips oder einer zu verschraubenden oder verklippenden Halteschelle, mit der Komponente 20 formschlüssig zu verbinden. Selbstverständlich ist auch denkbar, dass das Befestigungsmittel 85 den Kabelbaum 60 zusammen mit dem Aktuator 75 stoffschlüssig, beispielsweise mittels einer Klebverbindung in dem Montagebereich 80 an der Komponente 20, beispielsweise an der Befestigungsfläche 30, befestigt. Selbstverständlich kann das Kabelbaumsystem 15 auch lose in dem Montagebereich 80 verlegt sein.

Figur 2 zeigt eine Schnittansicht entlang einer in Figur 1 gezeigten Schnittebene A-A durch das in Figur gezeigte Kabelbaumsystem 15.

Der Kabelbaum 60 weist ein oder mehrere elektrische Kabel 90 auf, wobei jedes der elektrischen Kabel 90 einen elektrischen Leiter 95 und eine Leiterummantelung 100 aufweist. Die elektrischen Leiter 95 des Kabelbaums 60 verlaufen im Wesentlichen parallel zueinander, wobei eine Haupterstreckungsrichtung des elektrischen Leiters 95 im Wesentlichen eine Längsrichtung des Kabelbaums 60 definiert.

In Querrichtung senkrecht zu der Längsrichtung sind die elektrischen Kabel 90 des Kabelbaums 60 beabstandet zueinander oder in direktem Kontakt zueinander angeordnet. Die elektrischen Kabel 90 können im Wesentlichen identisch zueinander aber auch unterschiedlich zueinander ausgebildet sein. Die Leiterummantelung 100 ummantelt umfangsseitig den elektrischen Leiter 95 und isoliert den elektrischen Leiter 95 gegenüber den anderen elektrischen Kabeln und/oder einer Umgebung 105 des Kabelbaumsystems 15.

Das Kabelbaumsystem 15 weist ferner eine Ummantelung 110 auf. Die Ummantelung 110 ummantelt die einzelnen elektrischen Kabel 90 und verbindet die elektrischen Kabel 90 miteinander. Die Ummantelung 110 kann beispielsweise einen Schaumwerkstoff aufweisen, wobei das elektrische Kabel 90, vorzugsweise alle elektrischen Kabel 90 des Kabelbaums 60 in der Ummantelung 110 eingebettet sind. In einer alternativen Ausführungsform ist die Ummantelung 110 als Bandierung ausgebildet, wobei die Bandierung umfangsseitig um die elektrischen Kabel 90 gewickelt ist und die elektrischen Kabel 90 aneinander drückt.

Der Kabelbaum 60 ist in der Ausführungsform ausschließlich zur Verbindung der ersten Kontakteinrichtung 65 mit der zweiten Kontakteinrichtung 70 ausgebildet und weist keine weitere Verästelung auf. Selbstverständlich ist auch denkbar, dass der Kabelbaum 60 verästelt, beispielsweise Y-artig und/oder mit mehreren Abzweigungen versehen, ausgebildet ist. Auch kann der Kabelbaum 60 nur ein elektrisches Kabel 90 und/oder einen elektrischen Leiter 95 aufweisen, der die erste Kontakteinrichtung 65 mit der zweiten Kontakteinrichtung 70 elektrisch verbindet.

Das Kabelbaumsystem 15 weist neben dem Kabelbaum 60 den parallel zum Kabelbaum 60 verlaufenden Aktuator 75 auf. Der Aktuator 75 ist an einer Seite, in Figur 2 beispielhaft einer Unterseite, des Kabelbaums 60 angeordnet und erstreckt im Wesentlichen in Querrichtung über die gesamte Breite des Kabelbaums 60. Der Aktuator 75 ist dabei in die Ummantelung 110 eingebettet.

Die Ummantelung 110 umgreift den Kabelbaum 60, insbesondere die einzelnen elektrischen Kabel 90 umfangsseitig und verbindet die elektrischen Kabel 90 miteinander und mit dem Aktuator 75. Insbesondere wird durch eine Einbettung in einen Schaumwerkstoff der Ummantelung 110 eine zuverlässige Verbindung zwischen dem Aktuator 75 und dem Kabelbaum 60 sowie den einzelnen elektrischen Kabeln 90 untereinander sichergestellt.

Alternativ zu der Einbettung des Aktuators 75 in die Ummantelung 110 ist auch denkbar, dass unterseitig an die Ummantelung 110 der Aktuator 75 mit der Ummantelung 110 verbunden, beispielsweise stoffschlüssig verbunden, ist. Auch kann die Ummantelung 110 als Bandierung ausgeführt sein, die um den Aktuator 75 und den Kabelbaum 60 gewickelt ist.

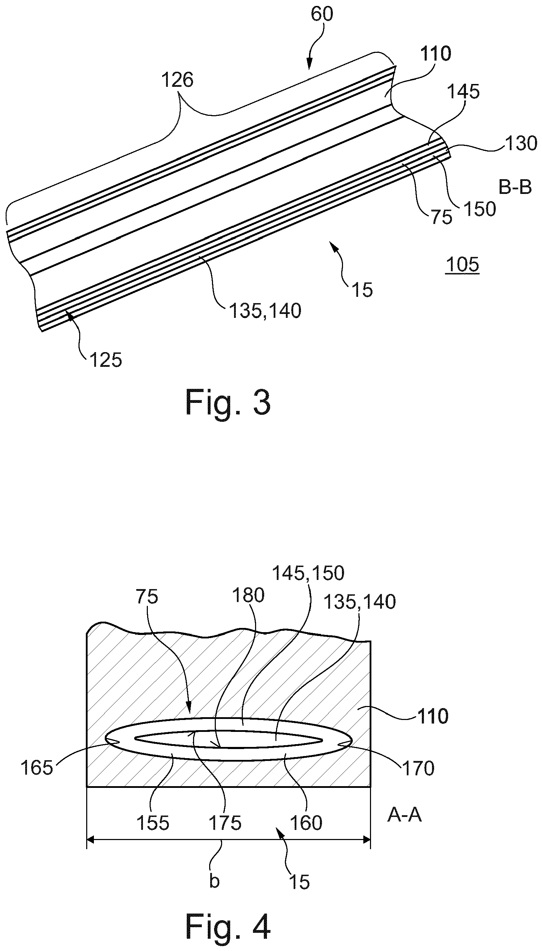

Figur 3 zeigt einen Ausschnitt einer Schnittansicht entlang einer in Figur 2 gezeigten Schnittebene B-B durch das in Figur 2 gezeigte Kabelbaumsystem 15.

Der Aktuator 75 ist im Wesentlichen parallel verlaufend zu dem Kabelbaum 60 angeordnet. Der Aktuator 75 weist eine Soft-Robotic-Struktur 125 auf.

Die Soft-Robotic-Struktur 125 weist in Figur 3 beispielhaft einen langgestreckten Körper 130 auf. Der Körper 130 begrenzt innenseitig gegenüber der Umgebung 105 und des Kabelbaumsystems 15 einen fluiddichten Druckraum 135. Der Körper 130 kann beispielsweise schlauchförmig ausgebildet sein. Der Druckraum 135 kann mit einem Druckfluid 140 befüllt sein. Das Druckfluid 140 kann flüssig und/oder gasförmig sein. Insbesondere kann das Druckfluid 140 Druckluft sein. In der Ausführungsform weist der Druckraum 135 in Längsrichtung des Kabelbaums 60 einen im Wesentlichen konstanten Querschnitt auf.

Der Aktuator 75 weist einen ersten Abschnitt 126 auf. Im ersten Abschnitt 126 ist der langgestreckte Körper 130 geradlinig verlaufend ausgebildet.

Figur 4 zeigt einen Ausschnitt einer Schnittansicht entlang der in Figur 1 gezeigten Schnittebene A-A durch das Kabelbaumsystem 15.

Im ersten Abschnitt 126 weist der Körper 130 einen ersten Wandabschnitt 145 mit einem ersten Profil 150 und einen gegenüberliegend zum ersten Wandabschnitt 145 angeordneten zweiten Wandabschnitt 155 mit einem zweiten Profil 160 auf. Der erste Wandabschnitt 145 ist auf einer zum Kabelbaum 60 zugewandten Seite und der zweite Wandabschnitt 155 auf einer zum Kabelbaum 60 abgewandten Seite angeordnet.

In Figur 4 ist in dem Druckraum 135 das Druckfluid 140 nicht mit Druck beaufschlagt. In Figur 4 kann jedoch auch ein Rest von dem Druckfluid 140 sich in dem Druckraum 135 aufhalten, das jedoch nicht mit Druck beaufschlagt ist. Das erste Profil 150 kann beispielsweise rechteckförmig oder schalenartig ausgebildet sein. Das erste Profil 150 kann, wie in Figur 4 dargestellt, auch konkav ausgebildet sein. Dabei ist in Querrichtung der erste Wandabschnitt 145 mit einem ersten Querende 165 mit dem zweiten Wandabschnitt 155 verbunden. In Querrichtung gegenüberliegend ist ein zweites Querende 170 des ersten Wandabschnitts 145 mit dem zweiten Wandabschnitt 155 verbunden.

In Höhenrichtung weist jeweils der erste Wandabschnitt 145 und der zweite Wandabschnitt 155 im Wesentlichen die gleiche Dicke auf. Die Dicke ist deutlich geringer als eine Maximalerstreckung des Kabelbaumsystems 15 in Höhenrichtung.

Das zweite Profil 160 kann spiegelsymmetrisch zu einer Symmetrieebene, die parallel zur Unterseite verläuft und in der das erste und zweite Querende 165, 170 angeordnet sind, zu dem ersten Wandabschnitt 145 ausgebildet sein. Dabei kann das zweite Profil 160 rechteckförmig oder konkav ausgebildet sein. Zusammen bilden der erste Wandabschnitt 145 und der zweite Wandabschnitt 155 eine schlauchartige Ausgestaltung des Aktuators 75 aus.

Der erste Wandabschnitt 145 weist eine erste Innenfläche 175 und der zweite Wandabschnitt 155 weist eine zweite Innenfläche 180 auf. In der Ausführungsform können, wie in Figur 4 gezeigt, die erste Innenfläche 175 und die zweite Innenfläche 180 beabstandet auch in drucklosem Zustand angeordnet sein. Um sicherzustellen, dass die erste Innenfläche 175 und die zweite Innenfläche 180 beabstandet zueinander angeordnet sind, weist der Aktuator 75 einen flexiblen Werkstoff auf, der gleichzeitig hinreichend Steifigkeit besitzt, um ein Gewicht der Ummantelung 110 und des Kabelbaums 60 abzustützen ohne dass hierbei die erste Innenfläche 175 und die zweite Innenfläche 180 aufeinander aufliegen. Dies stellt insbesondere sicher, dass ein schnelles Durchfluten, insbesondere ein Knicken des Aktuators, beispielsweise wenn das Kabelbaumsystem 15 im Kraftfahrzeug 10 um eine Kurve geführt ist, vermieden wird. Dadurch wird ein zuverlässiges Auffüllen des Druckraums 135 mit Druckfluid 140 über die gesamte Längserstreckung des Aktuators 75 sichergestellt.

Der Aktuator 75 weist in der Ausführungsform wenigstens einen der folgenden Werkstoffe auf: Kautschuk, Silikon, Polyethylen, Polyamid, Polyvinylchlorid, Thermoplast, Weichkunststoff. Vorzugsweise ist der Werkstoff flexibel und vorzugsweise im Wesentlichen nicht oder nur geringfügig (kleiner 5 Prozent, insbesondere kleiner 2 Prozent) mit dem druckbeaufschlagten Druckfluid 140 dehnbar. Ferner ist der Werkstoff im Wesentlichen vorzugweise fluiddicht, insbesondere gegenüber dem Druckfluid 140. So kann beispielsweise der Werkstoff luftdicht und/oder flüssigkeitsdicht sein.

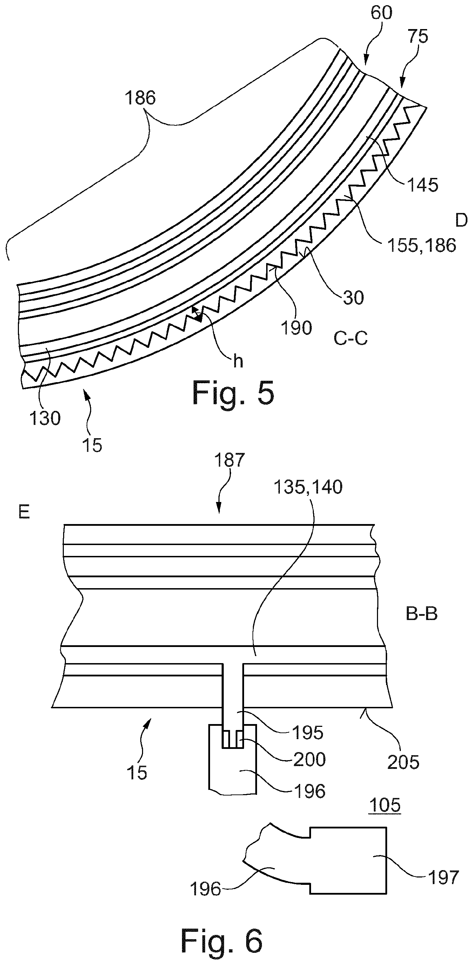

Figur 5 zeigt einen Ausschnitt, der in Figur 1 mit der Markierung D markiert ist, entlang einer in Figur 1 gezeigten Schnittkurve C-C durch das Kabelbaumsystem 15.

In einem zweiten Abschnitt 185, der sich an den ersten Abschnitt 126 in Längsrichtung anschließt, ist das Kabelbaumsystem 15 gekrümmt ausgebildet und folgt einer Krümmung der Innenseite 35 in dem Kraftfahrzeug 10. Auch im gekrümmten zweiten Abschnitt 185 ist das erste Profil 150 im Wesentlichen konstant ausgebildet.

Der zweite Wandabschnitt 155 weist im zweiten Abschnitt 185 ein variables, sich wieder in Längsrichtung wiederholendes drittes Profil 186 auf. Das dritte Profil 186 ist derart ausgebildet, dass eine innere Höhe zwischen der zweiten Innenfläche 180 und einer Außenfläche 190, die auf einer dem Kabelbaum 60 abgewandten Seite des Aktuators 75 angeordnet ist, über die Länge des Körpers 130 variiert. In der Ausführungsform ist die Außenfläche 190 zackenartig in der Schnittansicht C-C ausgebildet. Selbstverständlich kann die Außenfläche 190 auch andersartig ausgebildet sein. Das zackenartige dritte Profil 186 erstreckt sich über eine gesamte Quererstreckung des zweiten Wandabschnitts 155.

Durch die Einbettung des Körpers 130 in die Ummantelung 110 ist eine Außenfläche 190 des Körpers 130, die auf einer zur abgewandten Außenfläche 190 abgewandten Innenseite 35 beispielhaft angeordnet ist, durch die Ummantelung 110 (vollständig) bedeckt. Auch kann die Ummantelung 110 zu der Außenfläche 190 so angeordnet sein, dass die Außenfläche 190 freiliegt und nicht durch die Ummantelung 110 bedeckt ist.

Durch das dritte Profil 186 ist in Längsrichtung der zweite Wandabschnitt 155 weicher beziehungsweise elastischer ausgebildet als der erste Wandabschnitt 145.

Figur 6 zeigt einen mit einer Markierung E in Figur 1 gezeigten weiteren Ausschnitt des in Figur 1 gezeigten Kabelbaumsystems 15 entlang der in Figur 2 gezeigten Schnittebene B-B.

Zusätzlich kann das Kabelbaumsystem 15 ein Anschlussventil 195 aufweisen. Das Anschlussventil 195 ist innenseitig mit dem Druckraum 135 fluidisch verbunden. Das Anschlussventil 195 weist einen Anschlussabschnitt 200 zum Anschluss, beispielsweise eines Druckschlauchs 196, auf. Der Anschlussabschnitt 200 ragt über eine Seitenfläche 205 des Kabelbaumsystems 15 seitlich heraus. Auch kann das Anschlussventil 195 derartig angeordnet sein, dass der Anschlussabschnitt 200 oberseitig oder unterseitig über eine Oberseite oder die Unterseite des Kabelbaumsystems 15 herausragt. Das Anschlussventil 195 weist eine Sperrstellung auf, wobei in der Sperrstellung das Anschlussventil 195 den Druckraum 135 gegenüber der Umgebung 105 fluidisch abdichtet.

Das Anschlussventil 195 kann ferner zusätzlich zu der Sperrstellung eine Durchlassstellung aufweisen, wobei in der Durchlassstellung der Druckraum 135 fluidisch mit dem Anschlussabschnitt 200 verbunden ist. In der Durchlassstellung kann beispielsweise das Druckfluid 140 aus dem Druckraum 135 ausgeleitet werden oder über den Anschlussabschnitt 200 beispielsweise aus einem Druckreservoir 197 über den Druckschlauch 196 das Druckfluid 140 in den Druckraum 130 eingeleitet werden.

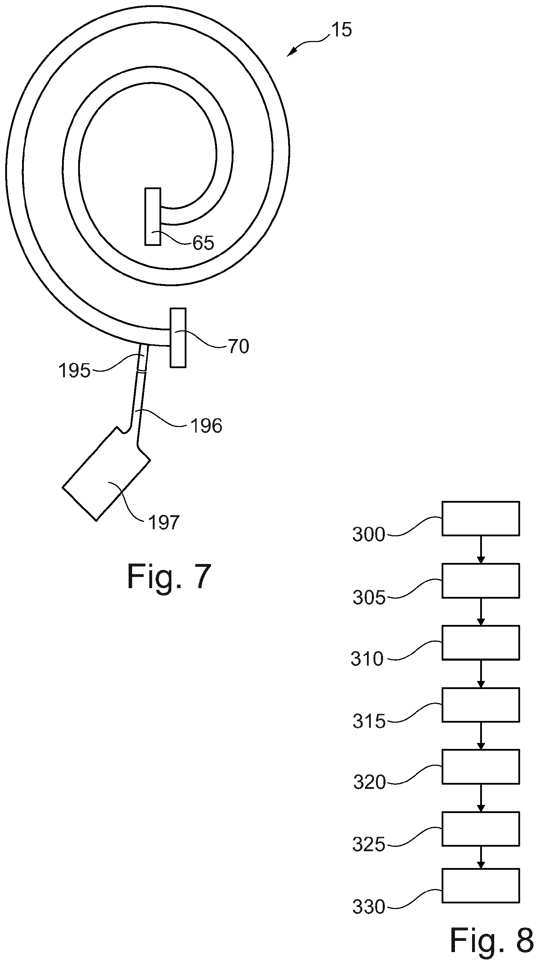

Figur 7 zeigt eine Seitenansicht auf das in den Figuren 1 bis 6 gezeigte Kabelbaumsystem 15 in einer Transportposition.

In der Transportposition ist das Kabelbaumsystem 15 beispielhaft spiralförmig eingewickelt und weist daher eine geringere Erstreckung auf als in der Montageposition. Dabei ist das Anschlussventil 195 beispielhaft benachbart zu der zweiten Kontakteinrichtung 70 angeordnet, während hingegen die erste Kontakteinrichtung 65 innenseitig quasi im Zentrum der spiralförmigen Anordnung des Kabelbausystems 15 angeordnet ist. Das Anschlussventil 195 ist außenseitig am Kabelbaumsystem 15 angeordnet und daher sowohl in der Transportposition als auch in der Montageposition frei zugänglich.

Selbstverständlich kann das Kabelbaumsystem 15 in der Transportposition auch eine andere als in Figur 7 gezeigte Form einnehmen. So kann beispielsweise das Kabelbaumsystem 15 auch brezenförmig oder nacheiner halben Acht ausgeformt sein.

Figur 8 zeigt ein Ablaufdiagramm eines Verfahrens zum Betrieb des in den Figuren 1 bis 7 gezeigten Kabelbaumsystems 15.

In einem ersten Verfahrensschritt 300 wird das Kabelbaumsystem 15 hergestellt. Dabei werden die elektrischen Kabel 90 und der Aktuator 75 beispielsweise gemeinsam montiert. Beispielsweise erfolgt die Montage des Aktuators 75 und des Kabelbaums 60 an einem Formbrett. Der Aktuator 75 wird mit dem Kabelbaum 60 mittels der Ummantelung 110 in der Montageposition verbunden. So kann beispielsweise nach dem Einlegen der elektrischen Kabel 90 für den Kabelbaum 60 und des Aktuator 75 in einem gemeinsamen Formraum des Formbretts, die Ummantelung 110 durch ein Einspritzen des Schaumwerkstoffs hergestellt werden, wobei der Schaumwerkstoff sowohl den Kabelbaum 60 als auch den Aktuator 75 umfließt und einbettet. Der Schaumwerkstoff schäumt zur Ummantelung 110 auf und härtet aus. Von besonderem Vorteil ist hierbei, wenn der Schaumwerkstoff zur Ausbildung der Ummantelung 110 eine größere Elastizität aufweist als der Aktuator 75.

Beispielhaft ist in der Montageposition das Druckfluid in dem Druckraum 135 nicht druckbeaufschlagt, sodass der Aktuator 75 in der Montageposition beispielhaft erschlafft ist. Dies hat den Vorteil, dass der Aktuator 75 besonders einfach zusammen mit dem Kabelbaum 60 an dem Formbrett, insbesondere in den Formraum, verlegt bzw. eingelegt werden kann.

Nach dem Aushärten des Schaumwerkstoffs kann beispielsweise das Kabelbaumsystem 15 aus dem Formraum des Formbretts entnommen werden.

Wird beispielsweise die Ummantelung 110 als Bandierung ausgebildet, kann nach Umwickelung des Aktuators 75 zusammen mit dem Kabelbaum 60 das Kabelbaumsystem 15 vom Formbrett entfernt werden.

In einem zweiten Verfahrensschritt 305, der auf den ersten Verfahrensschritt folgt, wird der Aktuator 75 von der Montageposition in die Transportposition verfahren. Dies erfolgt bei dem in den Figuren 1 bis 7 gezeigten Kabelbaumsystem 15 dahingehend, dass das Anschlussventil 195 mit dem Druckschlauch 196 verbunden wird und über das Anschlussventil 195 das Druckfluid 140 in den Druckraum 135 eingeleitet wird.

Das druckbeaufschlagte Druckfluid 140 wirkt auf den langgestreckten Körper 130 dahingehend, dass der langgestreckte Körper 130 sich unter dem Druck des Druckfluids verformt. Der Druck bewirkt, durch die unterschiedliche Elastizität des Körpers 130, insbesondere resultierend aus den unterschiedlichen Profilen 150, 160, 185 von der Montageposition sich in die Transportposition bewegt. Dabei kann, wie in Figur 7 gezeigt, der Aktuator 75 den Kabelbaum 60 spiralförmig einwikeln und/oder beispielsweise dass sich der Aktuator 75 im zweiten Abschnitt 185 krümmt und im ersten Abschnitt 126 geradlinig streckt. Durch die Verbindung des Aktuators 75 mit dem Kabelbaum 60 betätigt der Aktuator 75 den Kabelbaum 60, sodass der Kabelbaum 60 sich ebenso am Ende der Verformung des Aktuators 75 in der Transportposition befindet.

Eine Form des Kabelbausystem 15 sowohl in der Montageposition und/oder in der Transportposition kann auch in Verbindung mit dem Kabelbaum 60 vordefiniert festgelegt sein. Insbesondere kann in der Auslegung des Kabelbaumsystem hierbei eine Steifigkeit des elektrischen Leiters 95 der einzelnen elektrischen Kabel 90 und/oder der Kabelummantelung 95 mit berücksichtigt werden.

So ist beispielsweise einseitig das Kabelbaumsystem 15 in Längsrichtung steifer ausgebildet als an der Seite, an der der Aktuator 75 angeordnet ist. Wird das Druckfluid 140 in den Druckraum 135 eingeleitet, so dehnt sich der Aktuator 75 aus, sodass durch den steifen Kabelbaum 60 sich das Kabelbaumsystem 15 krümmt und in der Transportposition spiralförmig angeordnet ist.

Nachdem das Druckfluid 140 auf einen vordefinierten Druck gebracht worden ist, wird kein weiteres Druckfluid 140 in den Druckraum 135 eingeleitet und beispielsweise der Druckschlauch 196 vom Anschlussventil 195 abgezogen. Das Anschlussventil 195 verhindert durch Verbleiben in der Sperrstellung, dass das Druckfluid 140 aus dem Druckraum 135 ausströmt.

In einem dritten Verfahrensschritt 310 wird das Kabelbaumsystem 15 in der Transportposition verpackt und von seinem Herstellungsort, beispielsweise mittels Lkw oder einem Transportwagen, zum Einbauort verbracht. Durch den fluiddichten Druckraum 135 wird der Druck des Druckfluids 140 im Druckraum 130 im Wesentlichen aufrechterhalten, sodass das Kabelbaumsystem 15 besonders einfach, beispielsweise in Kartons verpackt, transportiert werden kann.

In einem auf den dritten Verfahrensschritt 310 folgenden vierten Verfahrensschritt 315 wird das verpackte Kabelbaumsystem 15 am Montageort entpackt und in entpacktem Zustand an eine vordefinierte Position mit einer vordefinierten Ausrichtung relativ zu der Komponente an der Komponente 20 positioniert. Dabei kann bereits mit zumindest einem der Befestigungmittel 85 das Kabelbaumsystem 15 mit der Komponente 20 zur Fixierung befestigt werden.

In einem auf den vierten Verfahrensschritt 315 folgenden fünften Verfahrensschritt 320 wird das Druckfluid 140 über das Anschlussventil 195 aus dem Druckraum 135 ausgelassen. Dadurch verfährt sich der Aktuator 75 von der Transportposition in die Montageposition. Die Steifigkeit sowohl der Ummantelung 110 als auch des Kabelbaums 60 kann den Aktuator 75 dabei unterstützen, um in die Montageposition von der Transportposition sich zu bewegen. Dabei legt sich in der Montageposition das Kabelbaumsystem 15 eigenständig, das heißt ohne zusätzliche Unterstützung beispielsweise eines Monteurs oder weiterer automatisierter Montagehilfseinrichtungen, beispielsweise eines Roboters, entlang der vordefinierten Bahn 81 im Montagebereich 80 ab. Die Abschnitte 126, 185 stellen sich, dass der Aktuator 75 den Kabelbaum 60 entlang der Bahn 81 in der Montageposition ablegt.

In einem auf den fünften Verfahrensschritt 320 folgenden sechsten Verfahrensschritt 325 wird mittels des (weiteren) Befestigungsmittels 85 das Kabelbaumsystem 15 an der Komponente 20 abschließend vollständig befestigt. Der Aktuator 75 verbleibt dabei weiterhin an dem Kabelbaum 60 und wird nicht demontiert.

In einem fakultativen siebten Verfahrensschritt 330 wird das Kraftfahrzeug 10 weiter montiert, beispielsweise wird im siebten Verfahrensschritt 330 die Innenverkleidung 40 an der Komponente 20 befestigt, sodass das Kabelbaumsystem 15 nicht ohne weitere Demontage zugänglich ist.

Selbstverständlich kann das Kabelbaumsystem 15 auch derartig ausgebildet sein, dass zur Aufrechterhaltung der Montageposition der Druckraum 135 des Aktuators 75 mit dem Druckfluid 140 befüllt ist und das Druckfluid 140 auf den Körper 130 derartig wirkt, dass der Körper 130 die Montageposition aufrechterhält. Wird das Druckfluid 140 über das Anschlussventil 195 aus dem Druckraum 135 entnommen, so bewegt sich der Aktuator 75 von der Montageposition in die Transportposition. Um das Kabelbaumsystem 15 nach dem Transport zu entfalten, wird in dieser Ausgestaltung im fünften Verfahrensschritt 320 das Druckfluid 140 in den Druckraum 135 eingeleitet, sodass der Aktuator 75 sich von der Transportposition in die Montageposition bewegt und dabei den Kabelbaum 60 und die Ummantelung 110 mitnimmt.

Diese alternative Ausgestaltung des Verfahrens zum Betrieb des Kabelbaumsystems 15 als auch die Ausgestaltung des Kabelbaums 60 hat den Vorteil, dass das Kabelbaumsystem 15 durch den druckbefüllten Aktuator 75 in der Montageposition besonders steif ausgebildet ist und dadurch besonders gut sowohl im ersten Verfahrensschritt 300 der Aktuator 75 mit dem Kabelbaum 60 verbunden werden kann als auch im sechsten Verfahrensschritt 325 besonders das entfaltete Kabelbaumsystem 15 mittels der Befestigungselemente 85 an der Komponente 20 befestigt werden kann. In der alternativen Ausführungsform kann nach Montage des Befestigungmittels 85 das Druckfluid 140 aus dem Druckraum 135 ausgelassen werden. Durch die Fixierung mit dem Befestigungsmittel 85 wird vermieden, dass nach Auslassen des Druckfluids 140 aus dem Druckraum 135 der Aktuator 75 wieder in die Transportposition zurückkehren kann.

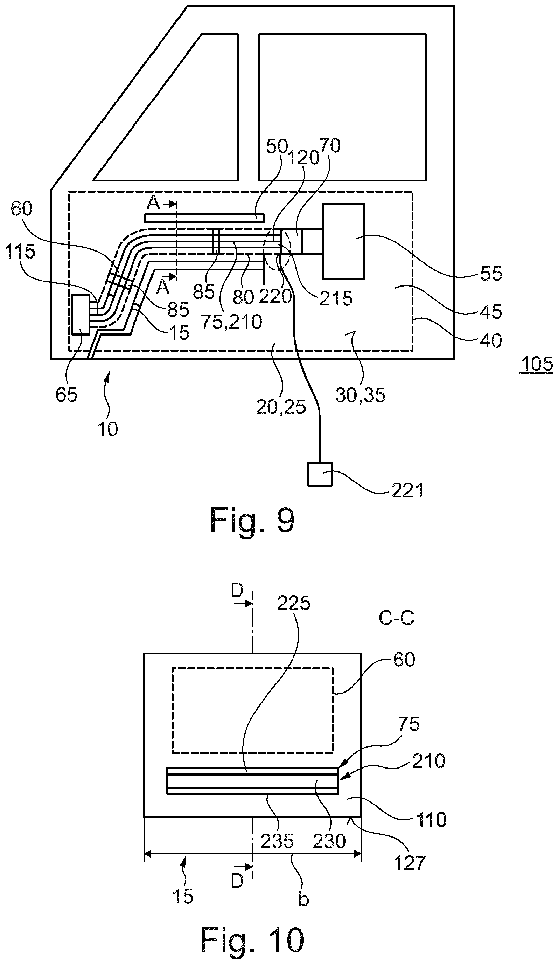

Figur 9 zeigt eine schematische Darstellung des Kraftfahrzeugs 10 mit einem Kabelbaumsystem 15 gemäß einer zweiten Ausführungsform.

Das Kabelbaumsystem 15 ist im Wesentlichen identisch zu dem in den Figuren 1 bis 7 gezeigten Kabelbaumsystem 15 gemäß der ersten Ausführungsform ausgebildet. Im Folgenden wird ausschließlich auf die Unterschiede des in Figur 9 gezeigten Kabelbaumsystems 15 gegenüber dem in den Figuren 1 bis 7 zeigten Kabelbaumsystem 15 eingegangen.

Der Aktuator 75 des in Figur 9 gezeigten Kabelbaumsystems 15 weist zwar die Soft-Robotic-Struktur 125 auf, jedoch ist die Soft-Robotic-Struktur 125 in Figur 9 elektrisch betreibbar. Dabei kann der Aktuator 75 ein dielektrisches Elastomer 210, eine elektrische Verbindung 215 und eine dritte Kontakteinrichtung 220 aufweisen. Die dritte Kontakteinrichtung 220 ist beispielhaft an der Position angeordnet, an der in den Figuren 1 bis 7 das Anschlussventil 195 angeordnet ist, sodass sowohl in der Montageposition als auch in der Transportposition die dritte Kontakteinrichtung 220 von außen her zugänglich ist.

Die elektrische Verbindung 215 verbindet elektrisch die dritte Kontakteinrichtung 220 mit dem dielektrischen Elastomer 210. Das dielektrische Elastomer 210 ist bandartig und dünnwandig ausgebildet und ist im Wesentlichen parallel verlaufend zu dem Kabelbaum 60 angeordnet. Das dielektrische Elastomer 210 ist parallel zu dem Kabelbaum 60 verlaufend angeordnet. Durch die Ummantelung 110 ist das dielektrische Elastomer 210 mit dem Kabelbaum 60 verbunden. Ebenso können das dielektrische Elastomer 210, die elektrische Verbindung 215 und beispielsweise zumindest ein Teil der dritten Kontakteinrichtung 220 in der Ummantelung 110 zumindest abschnittsweise eingebettet sein. Dies hat den Vorteil, dass die die elektrische Verbindung 215 beispielsweise als weiteres elektrisches Kabel ausgebildet sein kann, und dass das dielektrische Elastomer 210 vor einer mechanischen Beschädigung geschützt ist. Ferner ist das dielektrische Elastomer 210 gegenüber der Umgebung 105 elektrisch durch die Ummantelung 110 isoliert.

Figur 10 zeigt eine Schnittansicht entlang einer in Figur 9 gezeigten Schnittebene C-C durch das in Figur 9 gezeigte Kabelbaumsystem 15.

Das dielektrische Elastomer 210 erstreckt sich im Wesentlichen über wenigstens 80 % der maximalen Quererstreckung b des Kabelbaumsystems 15 und ist parallel zu der Unterseite 127 angeordnet. Das Kabelbaumsystem 15 eine beispielhaft rechteckförmige Ausgestaltung auf.

Das dielektrische Elastomer 210 weist eine erste Elektrode 225, eine Schicht 230 und eine zweite Elektrode 235 auf. Die zweite Elektrode 235 ist direkt angrenzend an die Schicht 230 auf einer zum Kabelbaum 60 abgewandten Seite der Schicht 230 angeordnet. Die erste Elektrode 225 ist auf der Schicht 230 auf einer dem Kabelbaum 60 zugewandten Seite der Schicht 230 angeordnet.

Die Schicht 230 ist plattenförmig ausgebildet und erstreckt sich in Querrichtung über wenigstens 80 % der Maximalerstreckung des Kabelbaumsystems 15. Die erste Elektrode 225 und die zweite Elektrode 235 sind in Höhenrichtung dünner ausgebildet als die Schicht 230.

Die erste Elektrode 225 und die zweite Elektrode 235 sind elektrisch leitend ausgebildet und werden durch die elektrisch isolierende Schicht 230 elektrisch voneinander isoliert. Die Schicht 230 weist einen elastischen Werkstoff, beispielsweise Silikon oder einen Acrylwerkstoff auf.

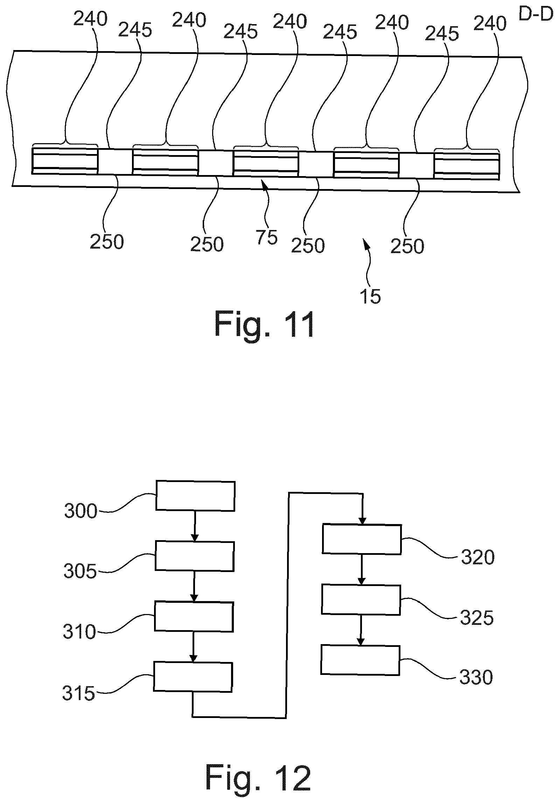

Figur 11 zeigt einen Ausschnitt einer Schnittansicht entlang einer in Figur 10 gezeigten Schnittebene D-D durch das in Figur 11 gezeigte Kabelbaumsystem 15.

Der Aktuator 75 kann mehrere Aktuatorabschnitte 240 aufweisen, wobei die Aktuatorabschnitte 240 in Längsrichtung beabstandet zueinander angeordnet sind. Dabei kann jeweils die erste Elektrode 225 mittels einer ersten elektrischen Verbindung 245 und die zweite Elektrode 235 mittels einer zweiten elektrischen Verbindung 250 jeweils untereinander in Serie geschalten sein. Die einzelnen Aktuatorabschnitte 240 können gleich lang oder in Längsrichtung unterschiedlich lang ausgebildet sein. Auch kann der Aktuator 75 unterbrechungsfrei ausgebildet sein, sodass der Aktuator 75 nur einen Aktuatorabschnitt 240 aufweist.

Figur 12 zeigt ein Ablaufdiagramm eines Verfahrens zum Betrieb des in den Figuren 9 bis 11 gezeigten Kabelbaumsystems 15.

Das Verfahren ist im Wesentlichen identisch zu dem in Figur 8 erläuterten Verfahren ausgebildet. Im Folgenden wird ausschließlich auf die Unterschiede des in Figur 12 gezeigten Verfahrens gegenüber dem in Figur 8 gezeigten Verfahren eingegangen.

Um den Aktuator 75 zwischen der Montageposition und der Transportposition zu bewegen, wird in der Ausführungsform die dritte Kontakteinrichtung 200 in der Montage des Kabelbaumsystems 15 im ersten Verfahrensschritt 300 mit einer elektrischen Energiequelle 221, die eine Hochspannung bereitgestellt, verbunden. Die von der elektrischen Energiequelle bereitgestellte Spannung beträgt wenigstens 2.000 bis 10.000 Volt. Durch die anliegende Spannung zwischen den beiden Elektroden 225, 235 bildet sich ein elektrisches Feld zwischen den beiden Elektroden 225, 235 aus, das auf die Elektroden 225, 235 wirkt und dazu führt, dass die erste Elektrode 225 und die zweiten Elektrode 235 sich gegenseitig abstoßen. Durch die elastische und elektrisch isolierende Ausgestaltung der Schicht 230 streckt sich Höhenrichtung der Aktuator 75 und hält bei Aufrechterhaltung der elektrischen Energieversorgung die Montageposition aufrecht. In der Montageposition wird der Aktuator 75 im ersten Verfahrensschritt zusammen mit dem Kabelbaum 60 durch die Ummantelung 110 verbunden.

Zum Transport wird im vierten Verfahrensschritt 315 die elektrische Energieversorgung von der dritten Kontakteinrichtung 220 abgetrennt, sodass die elektrische Energieversorgung für den Aktuator 75 unterbrochen wird. Das Trennen der elektrischen Energiequelle 221 von dem Aktuator 75 bewirkt, dass das elektrische Feld zwischen der ersten Elektrode 225 und der zweiten Elektrode 235 zusammenbricht und keine Abstoßungskräfte mehr zwischen den beiden Elektroden 225, 235 vorliegen. Dadurch zieht sich die (entlastete) elastische Schicht 230 zusammen, sodass in Höhenrichtung der Aktuator 75 dünner ist als in der Montageposition. Dies bewirkt, dass der Aktuator 75 von der Montageposition in die Transportposition übergeht. Dabei nimmt der Aktuator 75 den Kabelbaum 60 mit, sodass mit dem Aktuator 75 der Kabelbaum 60 zum Transport im fünften Verfahrensschritt 320 sich in der kompakten Transportposition befindet. Beispielhaft bewirkt das Zusammenziehen der Schicht 230 ein Krümmen des Kabelbaumsystems 15 in die in Figur 7 gezeigte Transportposition durch den vorhandenen Kabelbaum 60, der verhindert, dass an der Seite, an der der Kabelbaum 60 angeordnet ist, sich das Kabelbaumsystem 15 zusammenziehen kann.

Zur Montage im sechsten Verfahrensschritt 325 wird wieder über die dritte Kontakteinrichtung 220 der Aktuator 75 mit einer (weiteren) elektrischen Energiequelle 221 verbunden. Die elektrische Energiequelle 221 stellt elektrische Energie zur Überführung des Aktuators 75 aus der Transportposition in die Montageposition bereit. Der Aktuator 75 nimmt den Kabelbaum 60 und die Ummantelung 110 bei der Bewegung von der Transportposition in die Montageposition mit. Hat das Kabelbaumsystem 15 die Montageposition eingenommen, so wird es mittels des Befestigungsmittels 85 an der Komponente 20 befestigt. Im Anschluss daran wird der Aktuator 75 von der elektrischen Energiequelle 211 getrennt. Eine Bewegung des Aktuators 75 dann wieder zurück in seine Transportposition wird jedoch durch das Befestigungsmittel 85 verhindert und das Kabelbaumsystem 15 wird in der Montageposition gehalten.

Es wird darauf hingewiesen, dass das in Figur 12 beschriebene Verfahren auch dahingehend abgewandelt werden könnte, dass in der Montageposition der Aktuator 75 von der elektrischen Energiequelle 221 getrennt ist und zur Überführung des Aktuators 75 aus der Montageposition in die Transportposition und zurück elektrische Energie für den Aktuator 75 bereitzustellen ist und während des Transports die elektrische Energiequelle 221 mit dem Aktuator 75 verbunden ist und die elektrische Energieversorgung aufrechterhalten wird. Dazu kann beispielsweise die elektrische Energiequelle 221 in einem Transportkarton mitgeführt werden.

Alternativ ist auch denkbar, dass nach Überführung des Kabelbaumsystems 15 durch den Aktuator 75 von der Montageposition in die Transportposition das Kabelbaumsystem 15 in der Transportposition fixiert und verpackt wird und auch ohne Aufrechterhaltung der elektrischen Energieversorgung in der Transportposition verbleibt. Dies hat den Vorteil, dass nach Positionierung des Kabelbaumsystems 15 im vierten Verfahrensschritt 315 nach Entfernung der Fixierung des Kabelbaumsystems 15 in der Transportposition das Kabelbaumsystem 15 sich selbsttägig in die Montageposition bewegt und diese einnimmt.

Zusätzlich könnte auch vor Entfernen der Fixierung in der Transportposition der Aktuator 75 mit der elektrischen Energiequelle 221 verbunden werden und im Anschluss daran die Fixierung des Kabelbaumsystems 15 entfernt werden. Dadurch kann das Kabelbaumsystem 15 einfach an der Komponente 20 positioniert werden und mit zumindest einem Befestigungsmittel 85 an der Komponente 20 fixiert werden. Nach Fixierung kann die elektrische Energiequelle 221 von dem Aktuator 75 getrennt werden, sodass der Aktuator 75 sich von der Transportposition in die Montageposition bewegt und den Kabelbaum 20 und die Ummantelung 110 mitnimmt.

Das oben beschriebene Kabelbaumsystem 15 und die oben beschriebenen Verfahren haben den Vorteil, dass das Kabelbaumsystem 15 sich selbsttätig an der Komponente 20 entlang der vordefinierten Bahn 81 verlegt. Dadurch kann das Kabelbaumsystem 15 in einem vollautomatisierten Montageprozess montiert werden ohne dass hierbei - wie derzeit - manuell ein Monteur das Kabelbaumsystem 15 an der Komponente 20 auslegt und positioniert.

Ferner wird vermieden, dass durch das selbsttätige Einnehmen der Transportposition ein Verheddern des Kabelbaumsystems 15, insbesondere bei einer komplizierten Ausgestaltung des Kabelbaumsystems 15 mit einer zahlreichen Verästelung des Kabelbaums 60 entsteht. Des Weiteren hat der Aktuator 75 eine Knickschutzfunktion, sodass vermieden wird, dass einzelne elektrische Kabel 90 des Kabelbaums 60, insbesondere zum Transport unterhalb eines minimalen Biegeradius, verbogen werden und dabei beschädigt werden. Dadurch können mögliche Transportschäden durch das oben beschriebene Kabelbaumsystem 15 verhindert werden.

### Bezugszeichenliste

- 10: Kraftfahrzeug
- 15: Kabelbaumsystem
- 20: Komponente
- 25: Karosserieelement
- 30: Befestigungsfläche
- 35: Innenseite
- 40: Türinnenverkleidung
- 45: Innenraum
- 50: Strukturelement
- 55: weitere Komponente
- 60: Kabelbaum
- 65: erste Kontakteinrichtung
- 70: zweite Kontakteinrichtung
- 75: Aktuator
- 80: Montagebereich
- 81: Bahn
- 85: Befestigungsmittel
- 90: elektrisches Kabel
- 95: elektrischer Leiter
- 100: Leiterummantelung
- 105: Umgebung
- 110: Ummantelung
- 115: erste Längsende
- 120: zweites Längsende
- 125: Soft-Robotic-Struktur
- 126: erster Abschnitt
- 127: Unterseite
- 130: (langgestreckter) Körper
- 135: Druckraum
- 140: Druckfluid
- 145: erster Wandabschnitt
- 150: erstes Profil
- 155: zweiter Wandabschnitt
- 160: zweites Profil
- 165: erstes Querende
- 170: zweites Querende
- 175: erste Innenfläche
- 180: zweite Innenfläche
- 185: zweiter Abschnitt
- 186: drittes Profil
- 190: Außenfläche
- 195: Anschlussventil
- 196: Druckschlauch
- 197: Druckreservoir
- 200: Anschlussabschnitt
- 205: Seitenfläche
- 210: dielektrisches Elastomer
- 215: elektrische Verbindung
- 220: dritte Kontakteinrichtung
- 221: elektrische Energiequelle
- 225: erste Elektrode
- 230: Schicht
- 235: zweite Elektrode
- 240: Aktuatorabschnitt
- 245: erste elektrische Verbindung
- 250: zweite elektrische Verbindung

- 300: erster Verfahrensschritt
- 305: zweiter Verfahrensschritt
- 310: dritter Verfahrensschritt
- 315: vierter Verfahrensschritt
- 320: fünfter Verfahrensschritt
- 325: sechster Verfahrensschritt
- 330: siebter Verfahrensschritt

## Patentansprüche

1. Selbstentfaltendes Kabelbaumsystem (15) für ein Kraftfahrzeug (10),
- aufweisend wenigstens einen Aktuator (75) und wenigstens einen Kabelbaum (60) mit wenigstens einem elektrischen Kabel (90),
- wobei der Aktuator (75) mit dem Kabelbaum (60) verbunden ist,
- wobei der Aktuator (75) ausgebildet ist, den Kabelbaum (60) zwischen einer Transportposition und einer zur Transportposition unterschiedlichen Montageposition zu bewegen.

2. Kabelbaumsystem (15) nach Anspruch 1,
- wobei der Aktuator (75) weiter ausgebildet ist, in der Transportposition und/oder in der Montageposition den Kabelbaum (60) zu halten.

3. Kabelbaumsystem (15) nach Anspruch 1 oder 2,
- wobei in der Transportposition der Kabelbaum (60) eingefaltet und/oder eingerollt ist,
- wobei in der Montageposition der Kabelbaum (60) entlang einer vordefinierten Bahn ausgelegt ist.

4. Kabelbaumsystem (15) nach einem der vorhergehenden Ansprüche,
- aufweisend eine Ummantelung (110),
- wobei die Ummantelung (110) zumindest abschnittsweise den Kabelbaum (60) umgreift und den Kabelbaum (60) mit dem Aktuator (75) verbindet,
- wobei der Aktuator (75) vorzugsweise zumindest abschnittsweise in der Ummantelung (110) eingebettet ist.

5. Kabelbaumsystem (15) nach einem der vorhergehenden Ansprüche,
- wobei der Aktuator (75) eine Soft-Robotic-Struktur (125) aufweist.

6. Kabelbaumsystem nach einem der vorhergehenden Ansprüche,
- wobei der Aktuator (75) einen elastischen langgestreckten Körper (130) aufweist,
- wobei der Körper (130) innenseitig einen gegenüber einer Umgebung (105) des Kabelbaums fluiddichten Druckraum (135) begrenzt,
- wobei der Druckraum (135) mit einem Druckfluid (140) befüllbar ist,
- wobei das Druckfluid (140) druckbeaufschlagbar oder druckentlastbar ist,
- wobei das Druckfluid (140) auf den flexiblen Körper (130) einen druckbeaufschlagenden oder druckentlastenden Druck ausübt, der bewirkt, dass sich mindestens ein Teil des elastischen länglichen Körpers (130) krümmt und/oder streckt.

7. Kabelbaumsystem (15) nach Anspruch 6,
- wobei der Druckraum (135) an einer Seite des Kabelbaums (60) angeordnet ist und im Wesentlichen parallel zu dem Kabelbaum (60) verläuft,
- wobei sich der Druckraum (135) zu wenigstens 80 %, insbesondere im Wesentlichen über eine gesamte Längserstreckung des Kabelbaums (60) erstreckt.

8. Kabelbaumsystem (15) nach Anspruch 6 oder 7,
- wobei der langgestreckte Körper (130) einen ersten Wandabschnitt (145) mit einem ersten Profil (150) und einen gegenüberliegend zum ersten Wandabschnitt (145) angeordneten zweiten Wandabschnitt (155) aufweist,
- wobei der erste Wandabschnitt (145) auf einer dem Kabelbaum (60) zugewandten Seite und der zweite Wandabschnitt (155) auf einer dem Kabelbaum (60) abgewandten Seite angeordnet ist,
- wobei der zweite Wandabschnitt (155) ein sich wiederholendes variables weiteres Profil (160) aufweist,
- wobei das weitere Profil (160) derart ausgebildet ist, dass eine innere Höhe des zweiten Wandabschnitts (155) über seine Länge variiert,
- und/oder wobei der zweite Wandabschnitt (155) eine höhere Elastizität aufweist als der erste Wandabschnitt (145),
- wobei der zweite Wandabschnitt (155) ausgebildet ist, den Aktuator (75) zusammen mit dem Kabelbaum (60) als Reaktion auf eine Änderung des Drucks des Druckfluids (140) zu krümmen.

9. Kabelbaumsystem (15) nach einem der Ansprüche 5 bis 8,
- aufweisend ein Anschlussventil (195),
- wobei das Anschlussventil(195) fluidisch mit dem Druckraum (135) verbunden ist,
- wobei das Anschlussventil (195) derart angeordnet ist, dass das Anschlussventil (195) sowohl in der Transportposition als auch in der Montageposition von außen zugänglich ist.

10. Kabelbaumsystem (15) nach einem der vorhergehenden Ansprüche,
- wobei der Aktuator (75) ein dielektrisches Elastomer (210), eine elektrische Verbindung (215) und eine Kontakteinrichtung (220) aufweist,
- wobei das dielektrische Elastomer (210) mit dem Kabelbaum (60) mechanisch verbunden ist,
- wobei die elektrische Verbindung das dielektrische Elastomer mit der Kontakteinrichtung (220) elastisch verbindet,
- wobei die Kontakteinrichtung (220) mit einer elektrischen Energiequelle zur Bereitstellung einer elektrischen Energie elektrisch verbindbar ist.

11. Kabelbaumsystem nach Anspruch 10,
- wobei das dielektrische Elastomer (210) bandartig und dünnwandig ausgebildet ist, und im Wesentlichen parallel verlaufend zum Kabelbaum (60) angeordnet ist.

12. Verfahren zum Betrieb eines Kabelbaumsystems (15),
- wobei ein Kabelbaumsystem (15) nach einem der vorhergehenden Ansprüche bereitgestellt wird,
- wobei zum Transport des Kabelbaumsystems (15) der Aktuator (75) den Kabelbaum (60) aus einer Montageposition in die Transportposition bewegt,
- wobei das Kabelbaumsystem (15) an einer Komponente (20) eines Kraftfahrzeugs (10), insbesondere an einem Karosserieelement (25) des Kraftfahrzeugs (10), positioniert und in eine vordefinierte Ausrichtung gebracht wird,
- wobei der Aktuator (75) den Kabelbaum (60) von der Transportposition in die Montageposition bewegt und den Kabelbaum (60) entlang einer vordefinierten Bahn an der Komponente (20) auslegt,
- wobei das Kabelbaumsystem (15) in der Montageposition an der Komponente (20) mittels wenigstens eines Befestigungsmittels (85) befestigt wird.

13. Verfahren nach Anspruch 12 und Anspruch 6,
- wobei zur Überführung des Kabelbaums (60) von der Transportposition in die Montageposition oder von der Montageposition in die Transportposition ein druckbeaufschlagtes Druckfluid (140) in den Druckraum (135) eingeleitet wird,
- wobei das Druckfluid (140) auf den flexiblen Körper (130) einen druckbeaufschlagenden Druck ausübt,
- wobei der Druck bewirkt, dass mindestens ein Teil des elastischen länglichen Körpers (130) des Aktuators sich krümmt oder sich streckt,
- wobei der Aktuator (75) den Kabelbaum (60) mitnimmt.

14. Verfahren nach Anspruch 12 oder 13 und Anspruch 10 oder 11,
- wobei eine elektrische Energiequelle (221) bereitgestellt wird,
- wobei die elektrische Energiequelle (221) mit der Kontakteinrichtung (220) elektrisch verbunden ist,
- wobei die elektrische Energiequelle (221) eine elektrische Energie dem Aktuator (75) bereitstellt,
- wobei mittels der elektrischen Energie der Aktuator (75) von der Montageposition in die Transportposition oder von der Transportposition in die Montageposition bewegt wird,
- wobei die elektrische Energie in der Montageposition oder der Transportposition vorzugsweise fortwährend bereitgestellt wird,
- wobei der Aktuator (75) den Kabelbaum (60) mitnimmt und von der Transportposition in die Montageposition oder von der Montageposition in die Transportposition überführt.
